(19) Europäisches Patentamt
European Patent Office
Office européen des brevets

(11) EP 3 075 758 A1

(12) **EUROPEAN PATENT APPLICATION**
published in accordance with Art. 153(4) EPC

(43) Date of publication:
**05.10.2016 Bulletin 2016/40**

(21) Application number: **14865066.6**

(22) Date of filing: **21.11.2014**

(51) Int Cl.:
***C08G 69/28*** (2006.01) ***C08G 69/30*** (2006.01)
***C08L 77/06*** (2006.01)

(86) International application number:
**PCT/KR2014/011288**

(87) International publication number:
**WO 2015/080438 (04.06.2015 Gazette 2015/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.11.2013 JP 2013248212**
**11.11.2014 KR 20140156434**

(71) Applicant: **Samsung SDI Co., Ltd.**
**Yongin-si, Gyeonggi-do 446-577 (KR)**

(72) Inventors:
- **KANDA, Tomomichi**
**Yokohama-shi**
**Kanagawa 230-0027 (JP)**
- **SHIMODA, Tomoaki**
**Yokohama-shi**
**Kanagawa 230-0027 (JP)**

(74) Representative: **Michalski Hüttermann & Partner**
**Patentanwälte mbB**
**Speditionstraße 21**
**40221 Düsseldorf (DE)**

# (54) POLYAMIDE RESIN AND METHOD FOR MANUFACTURING SAME

(57) A method for manufacturing a polyamide resin, according to the present invention, comprises the steps of: obtaining a low-order condensate in a solid state by polycondensing dicarboxylic acid and diamine; and solid-state polymerizing the low-order condensate, wherein the dicarboxylic acid contains, with respect to the total amount of the dicarboxylic acid, approximately 70 mol% of aliphatic dicarboxylic acid having 9 to 12 carbon atoms, wherein the diamine contains, with respect to the total amount of the diamine, approximately 50 mol% of diamine represented by previously indicated chemical formula 1.



Printed by Jouve, 75001 PARIS (FR)

## Description

[Technical Field]

The present invention relates to a polyamide resin and a method of preparing the same. More particularly, the present invention relates to a technology for improving transparency of a polyamide resin.

[Background Art]

With excellent properties and easy melt molding, polyamides are broadly applied to materials for clothes, fibers for industrial materials, engineering plastics, and the like. Recently, polyamides used in the field of transparent components for industrial devices, mechanical, electrical, electronic and automobile parts, and optical materials such as glasses or lenses are required to have further improved properties and functions. Particularly, there is a need for development of polyamides that have further improved properties in terms of transparency, color, and mechanical strength.

Generally, polyamide resins are prepared through polycondensation of a dicarboxylic acid and a diamine. For example, Patent Document 1 (JP2009-203422A) discloses a continuous preparation method of a polyamide resin, in which a dicarboxylic acid having a certain structure and a diamine are continuously supplied to a polymerization reactor to produce a low-order condensate (polyamide prepolymer), which in turn is continuously supplied to a twin-screw extruder to produce a resin having a high polymerization degree.

However, the polyamine resin prepared by the method disclosed in Patent Document 1 fails to exhibit sufficient levels of properties in terms of transparency, color and mechanical strength, and is thus required to be further improved.

The inventors of the present invention have conducted research to solve the problems as mentioned above. From the research, the inventors completed the present invention based on the finding that a polyamide resin prepared to have a high degree of polymerization through solid polymerization of a low-order condensate, prepared by polycondensation of a dicarboxylic acid having a certain structure and a diamine exhibited significant improvement in terms of various properties, particularly, transparency.

[Disclosure]

[Technical Problem]

It is one object of the present invention to provide a polyamide resin that has excellent properties in terms of transparency, color and mechanical strength, particularly, high transparency.

It is another object of the present invention to provide a method of preparing a polyamide resin having excellent properties, particularly, high transparency.

The above and other objects of the present invention may be accomplished by the present invention described below.

[Technical Solution]

One aspect of the present invention relates to a method of preparing a polyamide resin. The preparation method includes: preparing a low-order condensate in a solid phase through polycondensation of a dicarboxylic acid and a diamine; and solid-polymerizing the low-order condensate, wherein the dicarboxylic acid includes about 70 mol% or more of a $C_9$ to $C_{12}$ aliphatic dicarboxylic acid based on the total amount of the dicarboxylic acid and the diamine includes about 50 mol% or more of a diamine represented by Formula 1 based on the total amount of the diamine:

[Formula 1]

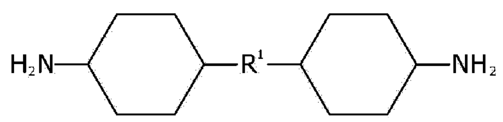

wherein $R^1$ is a $C_1$ to $C_3$ alkylene group.

In one embodiment, the low-order condensate may have a heat of fusion of about 10 J/g or more, as measured by a differential scanning calorimeter (DSC).

In one embodiment, the low-order condensate may have an inherent viscosity (IV) of about 0.1 dL/g to about 0.4 dL/g as measured at 25°C and at a concentration of 0.5 g/dL in concentrated sulfuric acid.

Another aspect of the present invention relates to a polyamide resin. The polyamide resin is prepared through polycondensation of a dicarboxylic acid and a diamine, wherein the dicarboxylic acid includes about 70 mol% or more of a $C_9$ to $C_{12}$ aliphatic dicarboxylic acid based on the total amount of the dicarboxylic acid, the diamine includes about 50 mol% or more of a diamine represented by Formula 1 based on the total amount of the diamine, and a 4 mm thick molded article produced using the polyamide resin has a total light transmission of about 85% or more:

[Formula 1]

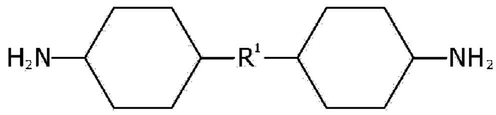

wherein $R^1$ is a $C_1$ to $C_3$ alkylene group.

In one embodiment, the polyamide resin may have an inherent viscosity (IV) of about 0.6 dL/g to about 1.5 dL/g as measured at 25°C and at a concentration of 0.5 g/dL in concentrated sulfuric acid.

In one embodiment, the polyamide resin may have a glass transition temperature of about 120°C or more.

In one embodiment, the polyamide resin may have a terminal amino group concentration ($[NH_2]$) of about 20 μmol/g to about 100 μmol/g.

[Advantageous Effects]

The present invention provides a polyamide resin that exhibits excellent properties in terms of transparency, color and mechanical strength, particularly, high transparency.

[Best Mode]

Hereinafter, embodiments of the present invention will be described in more detail.

<Method of producing polyamide resin >

A method of preparing a polyamide resin according to one embodiment of the invention includes: two polymerization processes, that is, (1) a process of preparing a low-order condensate in a solid phase through polycondensation of a dicarboxylic acid and a diamine (hereinafter, referred to as "Process (1)"); and (2) a process of solid-polymerizing the low-order condensate (hereinafter, referred to as "Process (2)").

A polyamide resin prepared by this method exhibits better properties (transparency, color and mechanical strength), particularly, better transparency than typical polyamide resins in the related art.

Properties of the polyamide resin are closely related to a crystal structure of a polycondensate (polyamide). The polyamide resin may have a completely amorphous structure or a crystalline structure depending upon structures of monomers thereof or a preparation method thereof, and a crystalline polyamide resin may exhibit various crystalline properties depending upon degree of crystallinity, rate of crystallization, and crystal size.

In one embodiment, the dicarboxylic acid and the diamine having a specific structure described in detail below are used as monomers, so that the low-order condensate may exhibit crystallinity and a molded product produced by melting a polyamide having a high degree of polymerization may have a fine crystal structure or an amorphous structure. As a result, the polyamide having a high degree of polymerization is obtained in a solid phase through solid polymerization of the crystallized low-order condensate, and a product having high transparency may be obtained through melt molding of the polyamide. With regard to improvement in transparency, it is assumed that the amorphous structure or the fine crystal structure has a smaller size than wavelengths of light and thus makes light absorption or light scattering difficult. Hereinafter, each process of the method of preparing a polyamide resin according to the present invention will be described.

Process (1)

In this process, a low-order condensate is obtained in a solid phase through polycondensation of the dicarboxylic acid and the diamine is performed.

In this process, the dicarboxylic acid essentially contains a $C_9$ to $C_{12}$ aliphatic dicarboxylic acid. The $C_9$ to $C_{12}$ aliphatic dicarboxylic acid may include any one of an acyclic aliphatic dicarboxylic acid and a cyclic aliphatic dicarboxylic acid (alicyclic dicarboxylic acid), and when the $C_9$ to $C_{12}$ aliphatic dicarboxylic acid is an acyclic aliphatic dicarboxylic

acid, the $C_9$ to $C_{12}$ aliphatic dicarboxylic acid may include any one of a linear aliphatic dicarboxylic acid and a branched aliphatic dicarboxylic acid.

Examples of the linear aliphatic dicarboxylic acid may include nonanedioic acid (azelaic acid), decanedioic acid (sebacic acid), undecanedioic acid, dodecanedioic acid, and the like.

Examples of the branched aliphatic dicarboxylic acid may include trimethyl adipic acid, 1,6-decanedicarboxylic acid, and the like.

Examples of the cyclic aliphatic dicarboxylic acid (alicyclic dicarboxylic acid) may include 2-methyl-1,4-cyclohexanedicarboxylic acid, 2,3-dimethyl-1,4-cyclohexanedicarboxylic acid, 2,5-dimethyl-1,4-cyclohexanedicarboxylic acid, 2,6-dimethyl-1,4-cyclohexanedicarboxylic acid, and the like.

Preferably, the acyclic aliphatic dicarboxylic acid, more preferably, the linear aliphatic dicarboxylic acid is used. The $C_9$ to $C_{12}$ aliphatic dicarboxylic acid may improve crystallinity of the polyamide low-order condensate, and the properties of the polyamide resin (transparency, color and mechanical strength), particularly, transparency thereof. In addition, these $C_9$ to $C_{12}$ aliphatic dicarboxylic acids may be used alone or in combination thereof.

The $C_9$ to $C_{12}$ aliphatic dicarboxylic acid may be present in an amount of, for example, about 70 mol% or more, for example, about 80 mol% or more, for example, about 90 mol% or more, for example, about 95 mol% or more, for example, about 98 mol% or more, or, for example, about 100 mol% or more, based on the total mole number of the dicarboxylic acid. Within this content range of the $C_9$ to $C_{12}$ aliphatic dicarboxylic acid, the polyamide low-order condensate may have improved crystallinity and the polyamide resin may exhibit improved properties (transparency, color and mechanical strength), particularly, improved transparency.

The dicarboxylic acid may include other dicarboxylic acids excluding the $C_9$ to $C_{12}$ aliphatic dicarboxylic acid. The other dicarboxylic acids may include a cyclic or acyclic aliphatic carboxylic acid and an aromatic carboxylic acid, without being limited thereto. Examples of the dicarboxylic acid excluding the $C_9$ to $C_{12}$ aliphatic dicarboxylic acid may include terephthalic acid, malonic acid, dimethyl malonic acid, succinic acid, glutaric acid, adipic acid, 2-methyl adipic acid, pimelic acid, 2,2-dimethyl glutaric acid, 3,3-diethyl succinic acid, suberic acid, 1,3-cyclopentanedicarboxylic acid, 1,4-cyclohexanedicarboxylic acid, isophthalic acid, 2,6-naphthalenedicarboxylic acid, 2,7-naphthalenedicarboxylic acid, 1,4-naphthalenedicarboxylic acid, 1,4-phenylenedioxydiacetaic acid, 1,3-phenylenedioxydiacetaic acid, diphenic acid, 4,4'-oxydibenzoic acid, diphenylmethane-4,4'-dicarboxylic acid, diphenylsulfone-4,4'-dicarboxylic acid, 4,4'-biphenyldicarboxylic acid, and the like. These dicarboxylic acids may be used alone or in combination thereof. In some embodiments, polyvalent carboxylic acid components such as trimellitic acid, trimesic acid and pyromellitic acid may be used together in a small amount, as needed.

The diamine essentially contains a diamine represented by Formula 1:

[Formula 1]

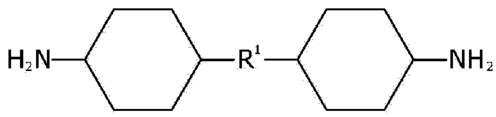

wherein $R^1$ is a $C_1$ to $C_3$ alkylene group. Examples of the $C_1$ to $C_3$ alkylene group may include a methylene group ($-CH_3-$), an ethylene group ($-CH_2H_2-$), a trimethylene group ($-CH_2CH_2CH_2-$), a propylene group ($-CH(CH_3)CH_2-$), an isopropylidene group ($-C(CH_3)_2-$), and a propylidene group ($-CH(CH_2CH_3)-$). Thereamong, the $C_1$ to $C_3$ alkylene group is preferably a linear alkylene group, specifically a methylene group, an ethylene group, or a trimethylene group. With the diamine represented by Formula 1, the low-order condensate has improved crystallinity and the polyamide resin may exhibit improved properties (transparency, color and mechanical strength), particularly, improved transparency. Further, the diamine represented by Formula 1 may be used alone or in combination thereof.

The diamine represented by Formula 1 may be present in an amount of, for example, about 50 mol% or more, for example, about 75 mol% or more, for example, about 90 mol% or more, for example, about 95 mol% or more, for example, about 98 mol% or more, or, for example, about 100 mol% or more, based on the total mole number of the diamine. Within this content range of the diamine represented by Formula 1, the polyamide low-order condensate has improved crystallinity and the polyamide resin may exhibit improved properties (transparency, color and mechanical strength), particularly, improved transparency.

The diamine may include other diamine components excluding the diamine represented by Formula 1. The other diamine components may include a cyclic or acyclic aliphatic diamine and an aromatic diamine, without being limited thereto. Examples of the other diamine components may include ethylenediamine, propanediamine, 1,4-butanediamine, 1,6-hexanediamine (hexamethylenediamine), 1,7-heptanediamine, 1,8-octanediamine, 1,9-nonanediamine, 1,10-decanediamine, 1,11-undecanediamine, 1,12-dodecanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine, 5-methyl-1,9-nonanediamine, cyclohexanediamine, methylaminocyclohexylhexanediamine, isophoronediamine, 1,3-bisaminomethylcyclohexane, 1,4-bisaminomethylcyclohexane, 4,4'-diamino-3,3'-dimethyldicyclohexylmethane, norbonanedimethaneamine, tricyclodecanedimethaneamine, p-phenylenediamine, m-phenylenediamine, 4,4'-diaminodiphenylsulfone, 4,4'-diaminodiphenyl ether, m-xylylenediamine, p-xylylenediamine, and the like. These diamine components may be used alone or in combination thereof.

The low-order condensate may be prepared by placing an aqueous solution of the monomers or salts thereof in, for example, a typical pressurized polymerization bath, and subjecting the same to polycondensation in an aqueous solvent while stirring.

The aqueous solvent refers to a solvent that contains water as a main component. Usable solvents besides water are not particularly limited so long as the solvents do not influence polycondensation reactivity or solubility, and may include, for example, alcohols such as methanol, ethanol, propanol, butanol, and ethylene glycol.

The moisture content in a reaction system upon initiation of polycondensation may be set to be in the range of about 10 wt% to about 35 wt% upon completion of polycondensation, for example, 20 wt% to about 60 wt%. With the moisture content of about 20 wt% or more, a substantially homogeneous solution may be obtained upon initiation of polycondensation. In addition, with the moisture content of about 60 wt% or less, it is possible to reduce time and energy in distillation and removal of moisture upon polycondensation while suppressing thermal degradation of the low-order condensate through reduction in reaction time.

In this polycondensation process, phosphorus catalysts may be used to improve polycondensation rate while preventing degradation upon polycondensation. Examples of the phosphorus catalysts may include hypophosphite, phosphate, hypophosphorous acid, phosphoric acid, phosphate ester, polymetaphosphates, polyphosphates, phosphine oxides, and phosphonium halogen compounds. For example, hypophosphite, phosphate, hypophosphorous acid, and phosphoric acid may be used. Examples of the hypophosphite may include sodium hypophosphite, potassium hypophosphite, calcium hypophosphite, magnesium hypophosphite, aluminum hypophosphite, vanadium hypophosphite, manganese hypophosphite, zinc hypophosphite, lead hypophosphite, nickel hypophosphite, cobalt hypophosphite, ammonium hypophosphite, and the like. Specifically, sodium hypophosphite, potassium hypophosphite, calcium hypophosphite and magnesium hypophosphite may be used. Examples of the phosphate may include sodium phosphate, potassium phosphate, potassium dihydrogen phosphate, calcium phosphate, vanadium phosphate, magnesium phosphate, manganese phosphate, lead phosphate, nickel phosphate, cobalt phosphate, ammonium phosphate, diammonium hydrogen phosphate, and the like.

The phosphate ester may include, for example, ethyloctadecyl phosphate. Examples of the polymetaphosphates may include sodium trimetaphosphate, sodium pentametaphosphate, sodium hexametaphosphate, polymetaphosphate, and the like. The polyphosphoric acid may include, for example, sodium tetrapolyphosphate. The phosphine oxide may include, for example, hexamethyl phosphoramide.

The phosphorus catalyst may be present in an amount of about 0.0001 parts by weight to about 5 parts by weight, or about 0.001 parts by weight to about 1 part by weight, based on 100 parts by weight of the polyamide. Although the phosphorus catalyst may be added at any time before solid polymerization is completed, the phosphorus catalyst is preferably added between charging of the raw materials and the completion of polycondensation of the low-order condensates. The phosphorus catalyst may be introduced multiple times. Further, two or more other phosphorus catalysts may be combined therewith.

In addition, polycondensation may be performed in the presence of an end capping agent. The end capping agent allows easy control of the molecular weight of the low-order condensate while improving melt stability of the low-order condensate. The end capping agents are not particularly limited so long as the end capping agents are monofunctional compounds having reactivity with a terminal amino group or a terminal carboxyl group, and examples of the end capping agents may include monocarboxylic acids, monoamines, acid anhydrides such as anhydrous phthalic acid and the like, monoisocyanate, monoacid halides, monoesters, and monoalcohols, without being limited thereto. Specifically, monocarboxylic acids or monoamines may be used in terms of reactivity and stability of end capping. More specifically, monocarboxylic acids may be used for easy handling.

As the end capping agent, any monocarboxylic acids may be used without limitation so long as the monocarboxyliacids are reactive with an amino group, and examples of the monocarboxylic acids may include aliphatic monocarboxylic acids such as acetic acid, propionic acid, butyric acid, valeric acid, caproic acid, caprylic acid, lauric acid, tridecylic acid, myristic acid, palmitic acid, stearic acid, pivalic acid, and isobutyric acid; alicyclic monocarboxylic acids such as cyclohexane carboxylic acid; aromatic monocarboxylic acids such as benzoic acid, toluic acid, $\alpha$-naphthalene carboxylic acid, $\beta$-naphthalene carboxylic acid, methylnaphthalene carboxylic acid, phenylacetic acid, and the like; and mixtures thereof. Specifically, acetic acid, propionic acid, butyric acid, valeric acid, caproic acid, caprylic acid, lauric acid, tridecylic acid, myristic acid, palmitic acid, stearic acid, and benzoic acid may be used given reactivity, stability of end capping, price, and the like.

As the end capping agent, any monoamine may be used without limitation so long as the monoamines have reactivity with a carboxylic group. Examples of the monoamines may include aliphatic monoamines such as methylamine,

ethylamine, propylamine, butylamine, hexylamine, octylamine, decylamine, stearylamine, dimethylamine, diethylamine, dipropylamine, and dibutylamine; alicyclic monoamines such as cyclohexylamine, and dicyclohexylamine; aromatic monoamines such as aniline, toluidine, diphenyl amine, and naphthylamine; and mixtures thereof. Specifically, butylamine, hexylamine, octylamine, decylamine, stearylamine, cyclohexylamine and aniline may be used given reactivity, melting point, stability of end capping, price, and the like.

Although the amount of the end capping agent used in preparation of the low-order condensate may depend on reactivity and melting point, reaction apparatus, reaction conditions of the end capping agents, and the like, the end capping agent may be typically present in an amount of about 0.1 mol% to about 15 mol% relative to the total mole number of the dicarboxylic acid or the diamine.

Preparation of the low-order condensate may be performed at elevated temperature and pressure while stirring the reactants. The polymerization temperature may be controlled after introducing the raw materials. In addition, the polymerization pressure may be controlled depending on the progress of polymerization.

In this process, the reaction temperature may range, for example, from about 200°C to about 250°C, for example, from 230°C to about 250°C. Under the condition that the reaction temperature is set to about 200°C or more, the reaction rate may be increased to allow the molecular weight of the low-order condensate to be sufficiently increased. Further, under the condition that the reaction temperature is set to about 250° or less, it is possible to prevent degradation of the color of the polyamide resin due to excessive thermal history.

In this process, the reaction pressure may range about 1.0 MPa to about 3.5 MPa, or from about 1.5 MPa to about 3.5 MPa. Under the condition that the reaction pressure is set to about 1.0 MPa or more, the temperature or moisture content in a reaction system may be easily controlled during polycondensation in which a large amount of water is removed by distillation. In addition, since it is possible to prevent the moisture content of the low-order condensate from being reduced or to prevent the low-order condensate from being solidified due to evaporation latent heat of water, the low-order condensate may be easily discharged. Further, under the condition that the reaction pressure is set to about 3.5 MPa or less, since it is possible to use a reactor having low pressure resistance, the polyamide resin may be prepared without increasing production costs. Further, the moisture content in the reaction system may be lowered, thereby increasing the degree of polymerization of the low-order condensate.

In this process, the reaction time may range from about 0.5 hours to about 4 hours, or from about 1 hour to about 3 hours. Herein, the reaction time refers to a period of time from a time point of reaching the reaction temperature to initiation of an operation of discharging the low-order condensate. Under the condition that the reaction pressure is set to about 0.5 hours or more, reaction may reach sufficient reaction rate, whereby unreacted materials do not remain in the system and a homogeneous low-order condensate may be obtained. Under the condition that the reaction pressure is set to about 4 hours or less, it is possible to prevent the low-order condensate from suffering excessive thermal history, and the degree of polymerization is not further increased even by extending the reaction time above this range.

In this process, the moisture content in the reaction system upon completion of reaction of the low-order condensate may range from about 15 wt% to about 35 wt%, or from about 20 wt% to about 35 wt%. Herein, the expression "upon completion of reaction" refers to a time point when the low-order condensate has a certain degree of polymerization to initiate an operation of discharging the low-order condensate, and the moisture content includes water of condensation prepared during reaction. The moisture content to be introduced into the reaction system may be adjusted given the amount of water of condensation to be prepared, or a predetermined amount of water may be distilled off or removed upon adjustment of the reaction pressure in a reactor equipped with a condenser and a pressure control valve. When the moisture content in the reaction system upon completion of reaction is about 15 wt% or more, precipitation or solidification of the low-order condensate substantially does not occur in the reaction system, whereby discharge of the low-order condensate may be easily performed. In addition, when the moisture content in the reaction system upon completion of reaction is about 35 wt% or less, a low-order condensate having a sufficient degree of polymerization may be obtained. Further, the discharge rate may be enhanced due to low moisture content to be separated by evaporation and a need for a drying process before solid state polymerization may be eliminated, thereby improving preparation efficiency.

In this process, in order to obtain the low-order condensate, polycondensation may be performed in a batch mode or in a continuous mode. Further, polycondensation for producing the low-order condensate is preferably performed under stirring in order to inhibit adherence of the low-order condensate to a reaction chamber while securing uniform polymerization.

The low-order condensate obtained by this process may have a heat of fusion of about 10 J/g or more, or about 15 J/g or more, or about 20 J/g or more, as measured by a differential scanning calorimeter (DSC). A method of measuring the heat of fusion using the differential scanning calorimeter (DSC) will be described in detail in Examples set forth below. Under the condition that the heat of fusion is set to about 10 J/g or more, the low-order condensate may be effectively polymerized while preventing uneven heating caused by fusion under solid polymerization conditions, whereby the polyamide resin may have improved properties (transparency, color and mechanical strength), particularly, improved transparency. The heat of fusion of the low-order condensate may be adjusted by adjusting the kinds of monomers used

in preparation of the polyamide resin or by crystallization of the low-order condensate. For example, the heat of fusion of the low-order condensate may be increased by increasing the ratio of the $C_9$ to $C_{12}$ aliphatic dicarboxylic acid to the total amount of the dicarboxylic acid, or the ratio of the diamine represented by Formula 1 to the total amount of the diamine while adjusting the temperature, moisture content, and discharge rate of the low-order condensate upon discharge of a polymerized solution of the low-order condensate from the reactor such that the low-order condensate may be discharged in a crystallized solid phase. In some embodiments, the heat of fusion of the low-order condensate may be adjusted by heating the discharged low-order condensate at a temperature higher than or equal to the glass transition temperature thereof and less than or equal to a solid polymerization temperature, as needed.

The low-order condensate obtained by this process may have an inherent viscosity (IV) of about 0.1 dL/g to about 0.4 dL/g, or about 0.1 dL/g to about 0.3 dL/g, or about 0.15 dL/g to about 0.3 dL/g, as measured at 25°C and at a concentration of 0.5 g/dL in concentrated sulfuric acid. A method of measuring the inherent viscosity (IV) will be described in Examples set forth below. When the inherent viscosity (IV) is about 0.1 dL/g or more, materials having low melting points such as the monomers and salts of the monomers, particularly, the low-order condensate, do not remain, and thus fusion or adherence of resin powder to the reactor upon solid polymerization may be prevented. When the inherent viscosity (IV) is about 0.40 dL/g or less, it is possible to prevent precipitation or solidification of the low-order condensate in the reaction system, thereby allowing the low-order condensate to be easily discharged. The inherent viscosity (IV) may be controlled by adjusting the kinds or mixing ratio of monomers in preparation of the polyamide resin, or by adjusting conditions for polycondensation (solvent amount (moisture content), reaction temperature, reaction time). For example, even under the same conditions in terms of the kinds of monomers and the mixing ratios of the monomers, the inherent viscosity (IV) may be increased by decreasing the solvent amount (moisture content), by increasing the reaction temperature, or by extending the reaction time.

The process may further include a salt adjustment process and/or an enrichment process prior to polymerization of the low-order condensate, as needed. The salt adjustment process refers to generation of salts from the dicarboxylic acid component and the diamine component. The salt adjustment process may be regulated to pH$\pm$0.5 of a neutralization point of the salts, preferably to about pH$\pm$0.3 of a neutralization point of the salts. In the enrichment process, the raw materials may be enriched to have a concentration of about +2 wt% to about +90 wt%, for example, about +5 wt% to about +80 wt%. The enrichment process may be performed at about 90°C to about 220°C, for example, at about 100°C to about 210°C, specifically at about 130°C to about 200°C. The enrichment process may be performed, for example, at about 0.1 MPa to about 2.0 MPa. Typically, the pressure of the enrichment process is controlled to be not more than the polymerization pressure. In order to promote the enrichment process, forced discharge by, for example, a nitrogen stream may be performed. The enrichment process is effective in reduction of polymerization time.

After the polycondensation process, the method of preparing a polyamide resin may further include discharging the low-order condensate, followed by cooling. Discharging the low-order condensate from the reaction chamber is performed under atmospheric pressure or less in an inert gas atmosphere. The process of discharging does not require a pressure vessel controlled to a specific pressure and separate supply of steam into the reaction chamber during removal of the low-order condensate from the reaction chamber. In addition, it is possible to obtain the low-order condensate through a simple and effective manner in the form of non-foam powder particles (powder or granules) exhibiting low thermal degradation, sufficiently high inherent viscosity, and high bulk density.

The inert gas atmosphere preferably has an oxygen concentration of about 1% by volume or less in order to inhibit oxidative degradation of the low-order condensate.

The discharge rate of the low-order condensate from the reaction chamber may be suitably adjusted depending upon the size of the reaction chamber, the amount of material in the reaction chamber, temperature, the size of a discharge outlet, the length of a nozzle, and the like. For example, discharge of the low-order condensate may be performed such that the discharge rate per cross-sectional area of the discharge outlet is about 2,000 kg/s/m$^2$ to about 20,000 kg/s/m$^2$. Within this range, since the obtained low-order condensate has a bulk density of, for example, about 0.35 g/cm$^3$ to about 0.8 g/cm$^3$, collapse, aggregation, and fusion to a reactor wall may thus be prevented or do not occur during solid polymerization described below, handling properties are good, and a large amount of low-order condensate may be supplied into a polymerization apparatus, thereby improving volume efficiency of the apparatus employed in solid polymerization.

Further, the low-order condensate discharged from the reaction chamber exhibits almost no thermal or oxidative degradation since the temperature of the low-order condensate is rapidly decreased to, for example, about 100°C or less due to latent heat of vaporization when discharged.

Furthermore, since the low-order condensate discharged from the reaction chamber vaporizes most moisture by latent heat thereof, this process allows cooling and drying of the low-order condensate to be performed simultaneously. Discharge under inert gas atmosphere such as nitrogen and the like or under pressure below atmospheric pressure is preferred since efficiency of drying and cooling may be improved. In addition, a cyclone type solid-gas separation apparatus may be used as a discharge container in order to improve efficiency of drying and cooling by preventing powder scattering upon discharge while enabling discharge at a high linear gas velocity.

The low-order condensate may be subjected to compacting or crude milling in order to obtain further increased bulk density or a uniform particle diameter, as needed.

The solid phase low-order condensate obtained as above is provided in crystal form, has a sufficiently high inherent viscosity and a low residual amount of unreacted materials, and thus allows solid polymerization at high temperature without causing fusion or aggregation between the low-order condensate particles. Further, the low-order condensate suffers from little deterioration due to side reaction.

Process (2)

In this process, the low-order condensate obtained in Process (1) is subjected to solid polymerization to obtain a polyamide resin.

Solid polymerization may be performed subsequent to discharge of the low-order condensate from the reaction chamber; after drying the low-order condensate discharged from the reaction chamber; after storing the low-order condensate discharged from the reaction chamber; or after subjecting the low-order condensate discharged from the reaction chamber to compacting or crude milling. When the low-order condensate is subjected to solid polymerization, that is, high degree polymerization, it is possible to obtain a polyamide resin that suffers from little thermal degradation.

The low-order condensate may be subjected to solid polymerization by any suitable method under any suitable conditions without limitation so long as high degree polymerization may be performed while maintaining a solid state without causing any fusion, aggregation and deterioration of the low-order condensate.

In order to prevent oxidative degradation of the low-order condensate and the resulting polyamide, solid polymerization may be performed in in an atmosphere of an inert gas such as helium gas, argon gas, nitrogen gas, and carbon dioxide gas or under a reduced pressure.

Although the temperature of solid polymerization is not particularly limited, the maximum reaction temperature may range, for example, from about 170°C to about 260°C, for example, about 200°C to about 250°C, for example, from about 220°C to about 240°C. Further, the maximum reaction temperature is not necessarily reached at the point at which solid polymerization is completed and may be obtained at any time before completion of solid polymerization. As such, solid polymerization may be performed at a lower temperature, that is, under milder conditions, than in the related art, thereby securing a high degree of polymerization while maintaining the crystal structure of the low-order condensate. As a result, the obtained polyamide resin has improved properties (transparency, color and mechanical strength), particularly, improved transparency.

As an apparatus for solid polymerization employed in this process, any known apparatus may be used without limitation. Examples of the apparatus for solid polymerization may include uniaxial disks, kneaders, twin axial paddles, a vertical tower type apparatus, a vertical tower type device, a rotatory drum type or double cone type solid polymerization apparatus, a drying device, and the like.

Although not particularly limited, solid polymerization may be performed for about 1 hour to about 20 hours. During solid polymerization, the low-order condensate may be stirred mechanically or by gas stream.

In the method of preparing a polyamide resin according to the present invention, various fiber materials such as glass fibers and carbon fibers, additives such as inorganic powder fillers, organic powder fillers, coloring agents, UV absorbers, light stabilizers, antioxidants, antistatic agents, flame retardants, crystallization accelerators, plasticizers, lubricants, and other polymers may be added in the process of preparing a low-order condensate, in the process of solid polymerization, or in an optional stage after solid polymerization.

<Polyamide resin>

The polyamide resin prepared by the method according to the present invention exhibits excellent properties (transparency, color and mechanical strength), particularly, high transparency. Accordingly, a novel polyamide resin exhibiting these properties also falls within the scope of the present invention.

That is, a polyamide resin according to another embodiment of the present invention is a polyamide resin prepared by polycondensation of a dicarboxylic acid and a diamine, wherein the dicarboxylic acid includes about 70 mol% or more of a $C_9$ to $C_{12}$ aliphatic dicarboxylic acid based on the total amount of the dicarboxylic acid, the diamine includes about 50 mol% or more of a diamine represented by Formula 1 based on the total amount of the diamine, and a 4 mm thick molded article produced using the polyamide resin has a total light transmission of about 85% or more:

[Formula 1]

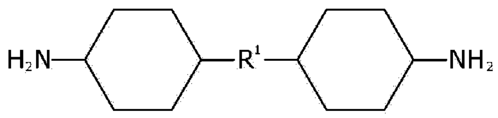

wherein $R^1$ is a $C_1$ to $C_3$ alkylene group.

The 4 mm thick molded article produced using the polyamide resin may have a total light transmission of about 85% or more, or about 86% or more, or about 87% or more. A method of measuring the total light transmission will be described in detail in Examples set forth below.

The polyamide resin may have an inherent viscosity (IV) of about 0.6 dL/g to about 1.5 dL/g, or about 0.7 dL/g to about 1.3 dL/g, as measured at 25°C and at a concentration of 0.5 g/dL in concentrated sulfuric acid.

The polyamide resin may have a glass transition temperature of about 120°C or more, or about 125°C or more, or about 130°C or more. A method of measuring the glass transition temperature will be described in detail in Examples set forth below.

The polyamide resin may have a yellowness index (YI) of about 8 or less, or about 6 or less. Particularly, the polyamide resin may have a post-injection molding yellowness index (YI) of about 10 or less, or about 8 or less. A method of measuring the yellowness index (YI) will be described in detail in Examples set forth below.

The polyamide resin may have a post-injection molding impact strength (Izod impact test) of about 8 kJ/$m^2$ or more, or about 9 kJ/$m^2$ or more. A method of measuring the impact strength will be described in detail in Examples set forth below.

The polyamide resin may have a terminal amino group concentration ([$NH_2$]) of about 20 (μmol/g to about 100 μmol/g, or about 30 μmol/g to about 80 μmol/g. If the terminal amino group concentration of the polyamide resin is less than about 20 μmol/g, the polyamide resin may suffer from degradation of heat-resistant color stability in thermal history since polycondensation is performed at high temperature for the purpose of improving reactivity of polycondensation. If the terminal amino group concentration of the polyamide resin exceeds about 100 μmol/g, the terminal amino group may be easily colored, thereby causing degradation of heat-resistant color stability (discoloration resistance under heating conditions). Accordingly, the polyamide resin having a terminal amino group concentration within the above range exhibits good heat-resistant color stability. The terminal amino group concentration may be measured by a suitable method, more specifically, by a method disclosed in the description of examples.

The polyamide resin may have a terminal carboxylic group concentration ([COOH]) of about 20 μmol/g to about 250 μmol/g, or about 30 μmol/g to about 200 μmol/g. If the terminal carboxylic group concentration of the polyamide resin is less than about 20 μmol/g, the polyamide resin may suffer from degradation of heat-resistant color stability in thermal history since polycondensation is performed at high temperature for the purpose of improving reactivity of the polycondensation. If the terminal carboxylic group concentration of the polyamide resin exceeds about 250 μmol/g, it may be difficult to obtain a desired molding material due to an insufficiently high degree of polymerization of the polyamide resin. Accordingly, the polyamide resin having a terminal carboxylic group concentration within the above range exhibits good heat-resistant color stability. The terminal carboxylic group concentration may be measured by a suitable method, more specifically, by a method disclosed in the description of examples.

With such good properties (transparency, color, mechanical strength), the polyamide resin may be suitably used in the field of transparent components for industrial devices, mechanical, electrical, electronic and automobile parts, and optical materials such as glasses or lenses.

[Mode for Invention]

## EXAMPLES

Next, the present invention will be described in more detail with reference to some examples. It should be understood that these examples are provided for illustration only and are not to be construed in any way as limiting the invention. Measurement of inherent viscosity (IV), terminal amino group concentration, terminal carboxylic group concentration, melting point, glass transition temperature, crystallization temperature and color, preparation of specimens, and property evaluation were performed as follows.

(1) Inherent viscosity

A specimen solution was prepared by dissolving a specimen at a concentration of 0.5 g/dL in 96% concentrated sulfuric acid. Flow seconds of each of the 96% concentrated sulfuric acid (blank) and the specimen solution were

measured using an Ubbelohde viscometer at 25°C and the inherent viscosity was calculated according to Equation 1.

[Equation 1]

$$\eta_{inh} = \ln(\eta_{rel})/c$$

$\eta_{rel}$: t1/t0
t1: flow seconds of the specimen
t0: flow seconds of the blank
c: concentration of the solution (g/dL)

(2) Terminal amino group concentration ([$NH_2$])

0.5 g of a specimen was dissolved in 8 ml of hexafluoroisopropanol while stirring at room temperature (25°C). After completion of dissolution, 30 ml of phenol/ethanol (80 vol%/20 vol%) was added to the resulting solution and stirred for 5 minutes. Thereafter, the resulting solution was subjected to neutralization titration with 0.1N HCl solution and the end point was determined through measurement of potential difference.

(3) Terminal carboxylic group concentration ([COOH])

0.3 g to 0.5 g of a specimen was accurately weighed and was dissolved in 20 ml of o-cresol by heating at 170°C while stirring in a nitrogen atmosphere. After completion of dissolution, the resulting solution was cooled, followed by adding 15 ml of benzyl alcohol and stirring for 5 minutes. The resulting solution was subjected to neutralization titration with 0.1N KOH (methanolic) solution and the end point was determined through measurement of potential difference.

(4) Melting point, glass transition temperature, crystallization temperature, heat of fusion

A differential scanning calorimeter (DSC) available from Seiko Instruments Inc. and a sample obtained by drying at 90°C in a vacuum for 12 hours was used in measurement of the low-order condensate. In measurement of the polyamide resin, a non-crystalized sample, which was obtained by heating the polyamide resin to 300°C or to a temperature 10°C higher than the melting point thereof in a nitrogen atmosphere, followed by quenching, was heated from 30°C to 300°C at a temperature increase rate of 10°C/min and at a flow rate of 10 ml/min in a nitrogen atmosphere, maintained for 5 minutes, and cooled to 100°C at a temperature decrease rate of 10°C/min to measure the glass transition temperature of the sample. Here, an endothermic peak temperature in the course of temperature elevation was measured as the melting point, and an exothermic peak temperature through crystallization in the course of temperature decrease was measured as the crystallization temperature. Furthermore, the heat of fusion was calculated from a peak area of the endothermic peak.

(5) Color (polyamide resin before molding)

Color of a sample was measured using a compact color/whiteness meter (NW-11, Nippon Denshoku Industries Co., Ltd).

Illumination/Light reception conditions: 45° annular illumination, 0° light reception
Measurement method: Diffraction grating, post-spectroscopy
Measurement area: 10 mmϕ, Light source: Pulse Xenon lamp
Standard illuminant/Observation condition: D65/10°
Measurement item: Yellowness index (YI)

(6) Preparation of injection-molded specimen

A strip-type specimen (80 mm × 10 mm × 4.0 mm) was prepared using an injection molding machine SE18DUZ (Sumitomo Heavy Industries, Ltd) under the following conditions.

[Molding conditions]
Molding temperature: 300°C to 350°C
Mold temperature: 40°C to 50°C

Injection pressure: 120 MPa to 140 MPa
Injection rate: 30 mm/sec
Revolution number of screw: 150 rpm
Cooling time: 40 seconds

(7) Property evaluation of injection-molded specimen

(7-1) Total light transmission

Total light transmission was measured using HAZE-GARD II (Toyo Seikiseisakusho Co., Ltd.) in accordance with ASTM D1003.

(7-2) Impact strength (Izod impact test)

Impact strength was measured under the following conditions in accordance with K7110: 1999.

Injection- molded specimen: 1A type (80 × 10 × 4 mm A notch)
Test conditions:

Hitting direction edgewise
Nominal pendulum energy 0.5 J
Test temperature 23°C
Measurement number n=5 (average value)

Tester: Digital impact tester DG-UB type (Toyo Seikiseisakusho Co., Ltd.).

(7-3) Color

As in (5) color measurement, a color of an injection-molded sample was measured using a compact color/whiteness meter (NW-11, Nippon Denshoku Industries Co., Ltd). In measurement, a standard white board (X:Y:Z = 92.3:97.4:104.5) was placed behind the injection molded molding having a thickness of 4 mm.

**Example 1**

In a 1 L autoclave reactor equipped with a partial condenser, a pressure control valve and a bottom discharge valve, 194.42 g (0.844 mol) of dodecanedioic acid, 177.58 g (0.844 mol) of [bis(4-aminocyclohexyl)methane] (PACM), and 248 g of distilled water (40 wt% based on the total weight of the charged raw materials) was placed and purged with nitrogen. The temperature of the reactor was increased to 130°C for 0.5 hours while stirring the raw materials, and maintained for 0.5 hours. Then, the inner temperature was increased to 240°C for 1 hour and maintained. After the inner pressure reached 3.0 MPa, 185 g of water was removed through distillation in order to maintain the pressure and reaction was continued for 1.0 hour with the pressure valve completely closed.

After a certain period of reaction time, the prepared low-order condensate was discharged to a container through the bottom discharge valve at room temperature (25°C) under a nitrogen atmosphere and atmospheric pressure while maintaining the temperature of the reaction bath and the moisture content (21 wt%) in a reaction system, thereby providing white low-order condensate powder.

The obtained low-order condensate had an inherent viscosity (IV) of 0.23 and exhibited a DSC endothermic peak at 258°C and crystallinity with a heat of fusion of 26 J/g.

Then, 300 g of the obtained low-order condensate was supplied into a 1000 mL round bottom flask, which in turn was placed in a rotary evaporator equipped with an oil bath. After flushing with nitrogen, the flask was dipped in the oil bath while being rotated under supply of nitrogen at a flow rate of 1 L/min. The inner temperature of the oil bath was increased to 130°C for 0.5 hours, maintained for 0.5 hours, increased to 210°C for 1 hour, followed by solid polymerization at this temperature for 4 hours. After a certain period of reaction time, the inner temperature of the flask was lowered to room temperature (25°C), thereby obtaining a highly polymerized polyamide.

The obtained polyamide resin had an inherent viscosity (IV) of 0.92, a glass transition temperature of 134°C, a melting point of 249°C, a crystallization temperature of 193°C as measured by DSC, and a YI of 4.1, thereby exhibiting a high degree of polymerization. The obtained polyamide resin had a sufficiently high degree of polymerization and exhibited a good color.

An injection-molded specimen was prepared using the obtained polyamide resin at a barrel temperature of

305°C and a mold temperature of 45°C. The injection-molded specimen had a total light transmission of 87.3%, a YI of 6.0, and an impact strength of 10.2 kJ/$m^2$. The injection-molded specimen exhibited high transparency and strength, and good external appearance and color without suffering from pitting caused by filling failure, silver streaks caused by generation of moisture and gas, sticking or inclusion of gels, and discoloration such as a yellowing phenomenon.

**Example 2**

Preparation and evaluation of a polyamide resin and an injection-molded specimen were performed in the same manner as in Example 1 except that 182.34 g (0.902 mol) of sebacic acid and 189.66 g (0.902 mol) of [bis(4-aminocyclohexyl)methane] (PACM) were used as raw materials and the reaction pressure of the low-order condensate was set to 2.8 MPa upon removal of 190 g of water through distillation.

The low-order condensate had an IV of 0.25 and exhibited a DSC endothermic peak at 274°C and crystallinity with a heat of fusion of 12 J/g.

The polyamide resin had an IV of 0.93, a glass transition temperature of 142°C, a melting point of 282°C, a crystallization temperature of 210°C, and a YI of 3.9, thereby exhibiting a good color and a sufficiently high degree of polymerization.

The injection-molded specimen had a total light transmission of 87.1%, a YI of 6.3, and an impact strength of 10.6 kJ/$m^2$. The injection-molded specimen had good external appearance with high transparency and good color, and high strength.

**Example 3**

Preparation and evaluation of a polyamide resin and an injection-molded specimen were performed in the same manner as in Example 2 except that 177.56 g (0.771 mol = 90 mol%) of dodecanedioic acid, 14.23 g (0.086 mol = 10 mol%) of terephthalic acid, and 180.21 g (0.857 mol) of bis(4-aminocyclohexyl)methane] (PACM) were used as raw materials and solid polymerization was performed at a reaction temperature of 230°C for 5 hours.

The low-order condensate had an IV of 0.19 and exhibited a DSC endothermic peak at 256°C and crystallinity with a heat of fusion of 15 J/g.

The polyamide resin had an IV of 0.93, a glass transition temperature of 144°C, a melting point of 246°C, a crystallization temperature of 207°C, and a YI of 4.5, thereby exhibiting a good color and a sufficiently high degree of polymerization.

The injection-molded specimen had a total light transmission of 86.4%, a YI of 6.8, and an impact strength of 10.1 kJ/$m^2$. The injection-molded specimen had good external appearance with high transparency and good color, and high strength.

**Example 4**

Preparation and evaluation of a polyamide resin and an injection-molded specimen were performed in the same manner as in Example 3 except that 142.31 g (0.618 mol = 70 mol%) of dodecanedioic acid, 44.00 g (0.265 mol = 30 mol%) of terephthalic acid, and 185.69 g (0.883 mol) of bis(4-aminocyclohexyl)methane] (PACM) were used as raw materials.

The low-order condensate had an IV of 0.17 and exhibited a DSC endothermic peak at 255°C and crystallinity with a heat of fusion of 9 J/g.

The polyamide resin had an IV of 0.86 and a glass transition temperature of 151°C, and did not have a melting point and a crystallization temperature. The polyamide resin had a YI of 6.2. Although there was slight fusion upon solid polymerization, the polyamide resin exhibited a sufficiently high degree of polymerization.

The injection-molded specimen had a total light transmission of 86.2%, a YI of 8.3, and an impact strength of 10.5 kJ/$m^2$. The injection-molded specimen exhibited high transparency, good external appearance, and high strength.

**Example 5**

Preparation and evaluation of a polyamide resin and an injection-molded specimen were performed in the same manner as in Example 2 except that 177.31 g (0.770 mol = 90 mol%) of dodecanedioic acid, 14.73 g (0.086 mol = 10 mol%) of 1,4-cyclohexanedicarboxylic acid (1,4-CHDA), and 179.96 g (0.855 mol) of bis(4-aminocyclohexyl)methane] (PACM) were used as raw materials and solid polymerization was performed at a reaction temperature of 220°C for 4 hours.

The low-order condensate had an IV of 0.19 and exhibited a DSC endothermic peak at 248°C and crystallinity with a heat of fusion of 18 J/g.

The polyamide resin had an IV of 0.89, a glass transition temperature of 146°C, a melting point of 245°C, a crystallization temperature of 218°C, and a YI of 4.2, thereby exhibiting a good color and a sufficiently high degree of polymerization.

The injection-molded specimen had a total light transmission of 87.4%, a YI of 6.3, and an impact strength of 9.8 kJ/$m^2$. The injection-molded specimen had good external appearance with high transparency and good color, and high strength.

**Example 6**

Preparation and evaluation of a polyamide resin and an injection-molded specimen were performed in the same manner as in Example 1 except that 190.77 g (0.828 mol) of dodecanedioic acid, 121.98 g (0.580 mol = 70 mol%) of [bis(4-aminocyclohexyl)methane] (PACM), and 59.25 g (0.249 mol = 30 mol%) of MACM[4,4'-diamino-3,3'-dimethyldicyclohexylmethane] were used as raw materials, and the reaction temperature and the reaction pressure of the low-order condensate were set to 230°C and 1.7 MPa, respectively.

The low-order condensate had an IV of 0.23 and exhibited a DSC endothermic peak at 252°C and crystallinity with a heat of fusion of 14 J/g.

The polyamide resin had an IV of 0.89, a glass transition temperature of 133°C and a melting point of 243°C, and did not have a crystallization temperature.

The polyamide resin had a YI of 4.7 and exhibited a good color and a sufficiently high degree of polymerization. The injection-molded specimen had a total light transmission of 86.8%, a YI of 7.6, and an impact strength of 10.4 kJ/$m^2$. The injection-molded specimen had good external appearance with high transparency and good color, and high strength.

**Example 7**

Preparation and evaluation of a polyamide resin and an injection-molded specimen were performed in the same manner as in Example 6 except that 188.42 g (0.818 mol) of dodecanedioic acid, 86.05 g (0.409 mol = 50 mol%) of [bis(4-aminocyclohexyl)methane] (PACM), and 97.53 g (0.409 mol = 50 mol%) of MACM[4,4'-diamino-3,3'-dimethyldicyclohexylmethane] were used as raw materials.

The low-order condensate had an IV of 0.22 and exhibited a DSC endothermic peak at 255°C and crystallinity with a heat of fusion of 6 J/g.

The polyamide resin had an IV of 0.83 and a glass transition temperature of 136°C, and did not have a melting point and a crystallization temperature. The polyamide resin had a YI of 6.5 and exhibited a sufficiently high degree of polymerization despite slight fusion upon solid polymerization.

The injection-molded specimen had a total light transmission of 85.0%, a YI of 8.5, and an impact strength of 11.0 kJ/$m^2$. The injection-molded specimen had good external appearance and high strength.

**Example 8**

Preparation and evaluation of a polyamide resin and an injection-molded specimen were performed in the same manner as in Example 1 except that the reaction temperature and the reaction pressure of the low-order condensate were set to 200°C and 1.3 MPa, respectively.

The low-order condensate had an IV of 0.08 and exhibited a DSC endothermic peak at 255°C and crystallinity with a heat of fusion of 34 J/g.

The polyamide resin had an IV of 0.82, a glass transition temperature of 132°C, a melting point of 252°C, a crystallization temperature of 203°C, and a YI of 5.2, thereby exhibiting a good color and a sufficiently high degree of polymerization despite slight fusion upon solid polymerization.

The injection-molded specimen had a total light transmission of 86.2%, a YI of 7.2, and an impact strength of 10.0 kJ/$m^2$. The injection-molded specimen had good external appearance and high strength.

**Comparative Example 1**

As in Example 1, after polycondensation of a low-order condensate at 240°C, the temperature of the mixture was increased to 300°C while reducing the reaction pressure to atmospheric pressure for 1 hour. After the temperature of the mixture was maintained at 300°C for 30 minutes, the mixture was moved from the reaction bath to a water bath, followed by cooling, pulverization and drying.

The obtained polyamide resin had an IV of 0.96, a glass transition temperature of 136°C and a melting point of 245°C, and did not have a crystallization temperature. The polyamide resin had a YI of 8.2 and exhibited a sufficiently high degree of polymerization and a slight yellow color.

The injection-molded specimen had a total light transmission of 84.2%, a YI of 15.1, and an impact strength of 9.6 kJ/$m^2$. The injection-molded specimen had low transparency and an unpleasant color as compared with the polyamide resin according to the present invention.

## Comparative Example 2

Preparation and evaluation of a polyamide resin and an injection-molded specimen were performed in the same manner as in Example 2 except that 152.49 g (1.043 mol) of adipic acid and 219.51 g (1.043 mol) of [bis(4-aminocyclohexyl)methane] (PACM) were used as raw materials and 196 g of water was removed through distillation.

The low-order condensate had an IV of 0.32 and exhibited unclear endothermic and exothermic behavior at a temperature of 300°C in DSC measurement.

The polyamide resin had an IV of 0.77, a glass transition temperature of 167°C, a melting point of 352°C, a crystallization temperature of 304°C, and a YI of 4.6. Although the polyamide resin exhibited a good color and a sufficiently high degree of polymerization, the polyamide resin has an excessively high melting point and thus, an injection-molded specimen could not be obtained using the polyamide resin due to generation of decomposition gas and reduction in viscosity upon injection molding after melting.

## Comparative Example 3

Preparation and evaluation of a polyamide resin and an injection-molded specimen were performed in the same manner as in Example 3 except that 123.86 g (0.538 mol = 60 mol%) of dodecanedioic acid, 59.57 g (0.359 mol = 40 mol%) of terephthalic acid and 188.57g (0.896 mol) of [bis(4-aminocyclohexyl)methane] (PACM) were used as raw materials.

The low-order condensate had an IV of 0.15 and did not have a DSC endothermic peak.

The polyamide resin had an IV of 0.62, a glass transition temperature of 154°C, and did not have a melting point and a crystallization temperature. The polyamide resin had a YI of 8.9. It was confirmed that the polyamide resin tended to be colored due to fusion and attachment of the resin upon solid polymerization.

The injection-molded specimen had a total light transmission of 83.2%, a YI of 16.2, and an impact strength of 6.5 kJ/$m^2$. The injection-molded specimen had low transparency, an unpleasant color, and low impact strength.

## Comparative Example 4

Preparation and evaluation of a polyamide resin and an injection-molded specimen were performed in the same manner as in Example 3 except that 123.15 g (0.535 mol = 60 mol%) of dodecanedioic acid, 61.38 g (0.356 mol = 40 mol%) of 1,4-cyclohexanedicarboxylic acid (1,4-CHDA), and 188.47 g (0.891 mol) of bis(4-aminocyclohexyl)methane] (PACM) were used as raw materials.

The low-order condensate had an IV of 0.25 and exhibited unclear endothermic and exothermic behavior at a temperature of 300°C or more in DSC measurement.

The polyamide resin had an IV of 0.66, a glass transition temperature of 153°C, a melting point of 351°C, a crystallization temperature of 315°C, and a YI of 5.2. Although the polyamide resin exhibited a good color and a sufficiently high degree of polymerization, the polyamide resin has an excessively high melting point and thus, an injection-molded specimen could not be obtained using the polyamide resin due to generation of decomposition gas and reduction in viscosity upon injection molding after melting.

## Comparative Example 5

Preparation and evaluation of a polyamide resin and an injection-molded specimen were performed in the same manner as in Example 6 except that 187.26 g (0.813 mol) of dodecanedioic acid, 68.42 g (0.325 mol = 40 mol%) of bis(4-aminocyclohexyl)methane] (PACM) and 116.32 g (0.488 mol = 60 mol%) of MACM[4,4'-diamino-3,3'-dimethyldicyclohexylmethane] were used as raw materials.

The low-order condensate had an IV of 0.20 and did not have a DSC endothermic peak. The polyamide resin had an IV of 0.77, a glass transition temperature of 134°C, and did not have a melting point and a crystallization temperature. The polyamide resin had a YI of 10.5, and it was confirmed that the polyamide resin tended to be colored due to fusion and attachment of the resin upon solid polymerization.

The injection-molded specimen had a total light transmission of 83.8%, a YI of 15.2, and an impact strength of 5.5 kJ/$m^2$. The injection-molded specimen had low transparency, an unpleasant color, and low impact strength.

Results are shown in Table 1.

[Table 1]

| | | E1 | E2 | E3 | E4 | E5 | E6 | E7 | E8 | CE1 (melting method) | CE2 | CE3 | CE4 | CE5 |
|---|---|---|---|---|---|---|---|---|---|---|---|---|---|---|
| Composition ratio (mol%) | PACM | 100 | 100 | 100 | 100 | 100 | 70 | 50 | 100 | 100 | 100 | 100 | 100 | 40 |
| | MACM | - | - | - | - | - | 30 | 50 | - | - | - | - | - | 60 |
| | 1,12-dodecanedioic acid | 100 | - | 90 | 70 | 90 | 100 | 100 | 100 | 100 | - | 60 | 60 | 100 |
| | 1,10-decanedioic acid | | 100 | - | - | - | - | - | - | - | - | - | - | - |
| | Terephthalic acid | - | - | 10 | 30 | | - | - | - | - | - | 40 | - | - |
| | 1,4-CHDA | - | - | - | - | 10 | - | - | - | - | - | - | 40 | - |
| | Adipic acid | - | - | - | - | - | - | - | - | - | 100 | - | - | - |
| Low-order condensate | Polymerization Temp. (°C) | 240 | 240 | 240 | 240 | 240 | 230 | 230 | 200 | - | 240 | 240 | 240 | 230 |
| | Pressure (MPa) | 3 | 2.8 | 2.8 | 2.8 | 2.8 | 1.7 | 1.7 | 1.3 | - | 2.8 | 2.8 | 2.8 | 1.7 |
| | IV (dL/g) | 0.23 | 0.25 | 0.19 | 0.17 | 0.19 | 0.23 | 0.22 | 0.08 | - | 0.32 | 0.15 | 0.25 | 0.2 |
| | Melting Temp. (°C) | 258 | 274 | 256 | 255 | 248 | 252 | 255 | 225 | - | >300°C unmeasurable | - | >300°C unmeasurable | - |
| | Heat of fusion (J/g) | 26 | 12 | 15 | 9 | 18 | 14 | 6 | 34 | - | - | - | - | - |
| | SSP Temp. (°C) | 210 | 210 | 230 | 230 | 220 | 210 | 210 | 210 | - | 220 | 230 | 230 | 210 |
| | SSP time (h) | 4 | 4 | 5 | 5 | 4 | 4 | 4 | 4 | - | 4 | 5 | 5 | 4 |
| | IV (dL/g) | 0.92 | 0.93 | 0.93 | 0.86 | 0.89 | 0.89 | 0.83 | 0.82 | 0.96 | 0.77 | 0.62 | 0.66 | 0.77 |
| | ($[NH_2]$ (μeq/g) | 36 | 66 | 56 | 62 | 66 | 55 | 53 | 52 | 32 | 98 | 104 | 103 | 61 |

(continued)

| | | E1 | E2 | E3 | E4 | E5 | E6 | E7 | E8 | CE1 (melting method) | CE2 | CE3 | CE4 | CE5 |
|---|---|---|---|---|---|---|---|---|---|---|---|---|---|---|
| Polyamide resin | ([COOH] (μeq/g) | 93 | 75 | 88 | 93 | 75 | 83 | 91 | 80 | 81 | 96 | 103 | 115 | 103 |
| | Tg(°C) | 134 | 142 | 144 | 151 | 146 | 133 | 136 | 132 | 136 | 167 | 154 | 153 | 134 |
| | Tm (°C) | 249 | 282 | 246 | - | 245 | 243 | - | 252 | 245 | 352 | - | 351 | - |
| | Heat of fusion (J/g) | 26 | 36 | 4 | - | 14 | 18 | - | 24 | 19 | 58 | - | 16 | - |
| | Crystallization Temp. (°C) | 193 | 210 | 207 | - | 218 | - | - | 203 | - | 304 | - | 315 | - |
| | YI | 4.1 | 3.9 | 4.5 | 6.2 | 4.2 | 4.7 | 6.5 | 5.2 | 8.2 | 4.6 | 8.9 | 5.2 | 10.5 |
| Injection molded specimen | Total light transmittance (%) | 87.3 | 87.1 | 86.4 | 86.2 | 87.4 | 86.8 | 85.0 | 86.2 | 84.2 | Molding impossible | 83.2 | Molding impossible | 83.8 |
| | YI | 6.0 | 6.3 | 6.8 | 8.3 | 6.3 | 7.6 | 8.5 | 7.2 | 15.1 | - | 16.2 | - | 15.2 |
| | Impact strength ($kJ/m^2$) | 10.2 | 10.6 | 10.1 | 10.5 | 9.8 | 10.4 | 11 | 10 | 9.6 | - | 6.5 | - | 5.5 |
| | External appearance | Good | Good | Good | Good | Good | Good | Good | Good | Strong yellow | - | Poor color, transparency | - | Strong yellow |
| SSP: Solid polymerization | | | | | | | | | | | | | | |

As can be seen from Table 1, the present invention may provide a polyamide resin that exhibits good properties in terms of transparency, color and impact strength.

It should be understood that various modifications, changes, alterations, and equivalent embodiments may be made by those skilled in the art without departing from the spirit and scope of the present invention.

## Claims

1. A method of preparing a polyamide resin, comprising:

   preparing a low-order condensate in a solid phase through polycondensation of a dicarboxylic acid and a diamine; and
   solid-polymerizing the low-order condensate,
   wherein the dicarboxylic acid comprises about 70 mol% or more of a $C_9$ to $C_{12}$ aliphatic dicarboxylic acid based on the total amount of the dicarboxylic acid and the diamine comprises about 50 mol% or more of a diamine represented by Formula 1 based on the total amount of the diamine:

   [Formula 1]

   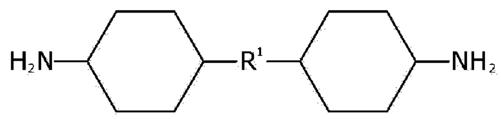

   wherein $R^1$ is a $C_1$ to $C_3$ alkylene group.

2. The method of preparing a polyamide resin according to claim 1, wherein the low-order condensate has a heat of fusion of about 10 J/g or more in measurement with a DSC (differential scanning calorimeter).

3. The method of preparing a polyamide resin according to claim 1 or 2, wherein the low-order condensate has an inherent viscosity (IV) of about 0.1 dL/g to about 0.4 dL/g as measured at 25°C and at a concentration of 0.5 g/dL in concentrated sulfuric acid.

4. A polyamide resin prepared through polycondensation of a dicarboxylic acid and a diamine,
   wherein the dicarboxylic acid comprises about 70 mol% or more of a $C_9$ to $C_{12}$ aliphatic dicarboxylic acid based on the total amount of the dicarboxylic acid, the diamine comprises about 50 mol% or more of a diamine represented by Formula 1 based on the total amount of the diamine, and a 4 mm thick molded article produced using the polyamide resin has a total light transmission of about 85% or more:

   [Formula 1]

   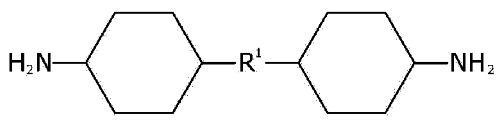

   wherein $R^1$ is a $C_1$ to $C_3$ alkylene group.

5. The polyamide resin according to claim 4, wherein the polyamide resin has an inherent viscosity (IV) of about 0.6 dL/g to about 1.5 dL/g as measured at 25°C and at a concentration of 0.5 g/dL in concentrated sulfuric acid.

6. The polyamide resin according to claim 4, wherein the polyamide resin has a glass transition temperature of about 120°C or more.

7. The polyamide resin according to any one of claims 4 to 6, wherein the polyamide resin has a terminal amino group concentration ($[NH_2]$) of about 20 $\mu$mol/g to about 100 $\mu$mol/g.

**INTERNATIONAL SEARCH REPORT**

International application No.
**PCT/KR2014/011288**

A. CLASSIFICATION OF SUBJECT MATTER

***C08G 69/28(2006.01)i, C08G 69/30(2006.01)i, C08L 77/06(2006.01)i***

According to International Patent Classification (IPC) or to both national classification and IPC

B. FIELDS SEARCHED

Minimum documentation searched (classification system followed by classification symbols)

C08G 69/28; C08G 69/30; C08G 69/32; C08G 69/14; B29C 33/38; C08G 69/26; C08L 77/06

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: Aliphatic Dicarboxylic acid, diamine, polycondensation, low rank compound, solid state polymerization, polyamide, melting calories, logarithmic viscosity, light transmittance

C. DOCUMENTS CONSIDERED TO BE RELEVANT

| Category* | Citation of document, with indication, where appropriate, of the relevant passages | Relevant to claim No. |
|---|---|---|
| X<br>A | KR 10-2008-0053198 A (EMS-CHEMIE AG) 12 June 2008<br>See abstract; paragraphs [0090], [0110]; claim 2. | 4-7<br>1-3 |
| A | KR 10-2013-0069386 A (CHEIL INDUSTRIES INC.) 26 June 2013<br>See abstract; claims 1, 3, 4; paragraphs [0017], [0073]. | 1-7 |
| A | KR 10-1999-0082927 A (TORAY INDUSTRIES, INC.) 25 November 1999<br>See abstract; claims 1-11. | 1-7 |
| A | KR 10-2013-0073773 A (CHEIL INDUSTRIES INC.) 03 July 2013<br>See abstract; claims 1-17. | 1-7 |
| A | JP 08-311198 A (MITSUI PETROCHEM IND. LTD.) 26 November 1996<br>See abstract; claims 1-3. | 1-7 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 FEBRUARY 2015 (26.02.2015) | **27 FEBRUARY 2015 (27.02.2015)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/011288

| Patent document cited in search report | Publication date | Patent family member | Publication date |
|---|---|---|---|
| KR 10-2008-0053198 A | 12/06/2008 | EP 1930373 A2 | 11/06/2008 |
| | | EP 1930373 A3 | 28/07/2010 |
| | | JP 05268339 B2 | 21/08/2013 |
| | | JP 2008-144170 A | 26/06/2008 |
| | | TW 200835747 A | 01/09/2008 |
| | | TW I408172 B | 11/09/2013 |
| KR 10-2013-0069386 A | 26/06/2013 | JP 05492864 B2 | 14/05/2014 |
| | | JP 05588959 B2 | 10/09/2014 |
| | | JP 05611932 B2 | 22/10/2014 |
| | | JP 2013-124285 A | 24/06/2013 |
| | | JP 2013-124287 A | 24/06/2013 |
| | | JP 2013-124288 A | 24/06/2013 |
| | | KR 10-2013-0069387 A | 26/06/2013 |
| | | KR 10-2013-0069388 A | 26/06/2013 |
| | | US 2013-0165621 A1 | 27/06/2013 |
| KR 10-1999-0082927 A | 25/11/1999 | CN 1145656 C0 | 14/04/2004 |
| | | CN 1232047 A0 | 20/10/1999 |
| | | EP 0947536 A2 | 06/10/1999 |
| | | EP 0947536 A3 | 12/12/2001 |
| | | EP 0947536 B1 | 25/06/2003 |
| | | EP 0947536 B2 | 13/12/2006 |
| | | JP 04491848 B2 | 30/06/2010 |
| | | JP 11-343341 A | 14/12/1999 |
| | | TW 530071 A | 01/05/2003 |
| | | US 6169161 B1 | 02/01/2001 |
| KR 10-2013-0073773 A | 03/07/2013 | WO 2013-094916 A1 | 27/06/2013 |
| JP 08-311198 A | 26/11/1996 | CA 2177240 A1 | 25/11/1996 |
| | | DE 69630260 D1 | 13/11/2003 |
| | | DE 69630260 T2 | 22/07/2004 |
| | | EP 0744431 A2 | 27/11/1996 |
| | | EP 0744431 A3 | 15/10/1997 |
| | | EP 0744431 B1 | 08/10/2003 |
| | | SG 55829 A1 | 16/01/2001 |
| | | US 06130312 A | 10/10/2000 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009203422 A